# EUROPEAN PATENT SPECIFICATION

(11) **EP 0 686 521 B1**
(45) Date of publication and mention of the grant of the patent: **16.12.1998**
(21) Application number: 95107981.3
(22) Date of filing: 24.05.1995
(51) Int. Cl.: B60K 1/04, B62K 19/30, H01M 2/10, B62M 23/02

(54) **Power source battery storing structure in motor-assisted bicycle**
Struktur zum Befestigen einer Batterie für ein Fahrrad mit Hilfsmotor
Structure de fixation d'une batterie pour bicyclette à moteur auxiliaire

(30) Priority: 11.06.1994 JP 152723/94
(43) Date of publication of application: 13.12.1995
(73) Proprietor: HONDA GIKEN KOGYO KABUSHIKI KAISHA, Minato-ku, Tokyo (JP)
(72) Inventor: Iseno, Mitsuru, c/o K.K. Honda Gijutsu Kenkyusho, Wako-shi, Saitama (JP); Yamaguchi, Masaaki, c/o K.K. Honda Gijutsu Kenk., Wako-shi, Saitama (JP); Tamaki, Kenji, c/o K.K. Honda Gijutsu Kenkyusho, Wako-shi, Saitama (JP)
(74) Representative: Liska, Horst, Dr.-Ing.

(56) References cited:
- EP-A- 0 539 269
- EP-A- 0 561 268
- DE-U- 7 724 390
- DE-U- 8 814 849
- FR-A- 1 303 060
- PATENT ABSTRACTS OF JAPAN vol. 017, no. 240 (M-1409), 14 May 1993 & JP 04 365690 A (YAMAHA MOTOR CO LTD), 17 December 1992,

## Description

### DETAILED DESCRIPTION OF THE INVENTION

### Field of the Invention

The present invention relates to a storing structure for power source batteries to be mounted on a motor-assisted bicycle using motive power of a motor for assisting man power propelling the bicycle.

### Prior Art

In many cases, a conventional motor-assisted bicycle has a main frame V-shaped in side elevation by integrally connecting the lower end of a down tube extending rearward and downward from a head pipe and the lower end of a seat tube extending rearward and upward. A heavy power source battery is mounted along the down tube or the seat tube so as not to occupy a luggage space above front and rear wheels and not to hinder a rider from smoothly getting on and off the motor-assisted bicycle.

To mount the power source battery along the down tube or the seat tube of the motor-assisted bicycle, a battery case adapted to be detachably mounted on the down tube or the seat tube is used to store the battery. In the battery case, a plurality of batteries are straight arranged in such a manner that the line connecting the positive electrodes and the negative electrodes of the batteries is pointed in a longitudinal direction of the battery case, so as to serially connect the positive and negative electrodes of the batteries.

EP 0 561 268 shows a power source battery storing structure in a motor-assisted bicycle, comprising an elongated power source battery case provided on a frame of said motor-assisted bicycle, for storing an elongated, substantially prismatic power source battery assembly. The battery case contains 20 cylindrical D-type batteries.

### Problem to be Solved by the Invention

However, when commercially available batteries such as "D"-size batteries are stored in the battery case, the number of the batteries that can be stored into the battery case is limited, causing a problem that in many cases a supply voltage obtained by the series connection of the batteries cannot reach a rated voltage for a driving motor in the motor-assisted bicycle. Accordingly, a battery having a special size and shape must be specially ordered from a battery maker, causing an increase in cost of the battery.

Due to the great number of single batteries to be stored in the battery case, the single batteries tend to disintegrate before mounting in the battery case.

### Means, Operation, and Effect of solving the Problem

The present invention has been achieved to solve the above problem and provide a power source battery storing structure in a motor-assisted bicycle, comprising an elongated power source battery case provided on a frame of said motor-assisted bicycle, for storing an elongated, substantially prismatic power source battery assembly, wherein the power source battery assembly is formed by arranging a plurality of first cylindrical batteries in a row in a direction perpendicular to a center line of each first cylindrical battery in such a condition that cylindrical surfaces of said first cylindrical batteries are in contact with each other, and stacking a plurality of second cylindrical batteries on the row of said first cylindrical batteries in such a condition that each second cylindrical battery is partially received in an upper recess defined between said first cylindrical batteries adjacent to each other; and wherein a hollow heat-shrinkable film, into which the elongated power source battery assembly is inserted in longitudinal direction of said row, covers an outer periphery of said elongated power source battery assembly and end faces of the first and second cylindrical batteries to integrate said power source battery assembly.

With this arrangement, the cylindrical batteries can be highly densely stored in the battery case, and the battery case can be compactly mounted on the motor-assisted bicycle so as not to hinder a rider from smoothly getting on and off the bicycle. The shrinkable film keeps the batteries together and enhances the handling of the battery assembly.

Furthermore, the inexpensive commercially available cylindrical batteries such as "D"-size batteries are used rather than any specially shaped and sized batteries. Accordingly, the battery cost can be greatly reduced.

Many cylindrical batteries can be stored in the battery case to be mounted along the down tube or the seat tube of the motor-assisted bicycle, thereby easily obtaining a power source that can drive a driving motor in the motor-assisted bicycle.

The cylindrical batteries can be firmly joined together and the electrical connection between the electrodes can be ensured to prevent a break. Furthermore, the cylindrical batteries can be easily stored into or removed from the battery case, and can also be stably held in the battery case.

### BRIEF DESCRIPTION OF THE DRAWINGS

Fig. 1 is a schematic side view of a motor-assisted bicycle having a power source battery storing structure according to the present invention.

Fig. 2 is a vertical sectional view of a battery case storing a battery pack in a preferred embodiment of the power source battery storing structure shown in Fig. 1.

Fig. 3 is an exploded side view of a lower case and an upper case constituting the battery case.

Fig. 4 is a view taken in the direction of the arrow IV-IV in Fig. 3.

Fig. 5 is a view taken in the direction of the arrow V-V in Fig. 3.

Fig. 6 is a view taken in the direction of the arrow VI-VI in Fig. 2.

Fig. 7 is a cross section taken along the line VII-VII in Fig. 2.

Fig. 8 is a cross section taken along the line VIII-VIII in Fig. 2.

Fig. 9 is a cross section taken along the line IX-IX in Fig. 2.

Fig. 10 is an exploded perspective view of side covers and a center cover.

Fig. 11 is a side view of the side covers in the condition where the center cover and the battery case have not yet been mounted on the side covers.

Fig. 12 is a side view showing a condition where the battery case is being mounted onto or being removed from the side covers and the center cover.

Fig. 13 is a side view showing a condition where the battery case has been mounted on the side covers and the center cover.

Fig. 14 is a view taken in the direction of the arrow XIV in Fig. 13.

Fig. 15 is a top plan view of a discharging connector.

Fig. 16 is a view taken in the direction of the arrow XVI in Fig. 15.

Fig. 17 is a cross section taken along the line XVII-XVII in Fig. 16.

Fig. 18 is a top plan view of a connector mounted on a body cover.

Fig. 19 is a view taken in the direction of the arrow XIX in Fig. 18.

Fig. 20 is a cross section taken along the line XX-XX in Fig. 19.

Fig. 21 is a vertical sectional view of a rear portion of the battery case and a lower portion of the center cover.

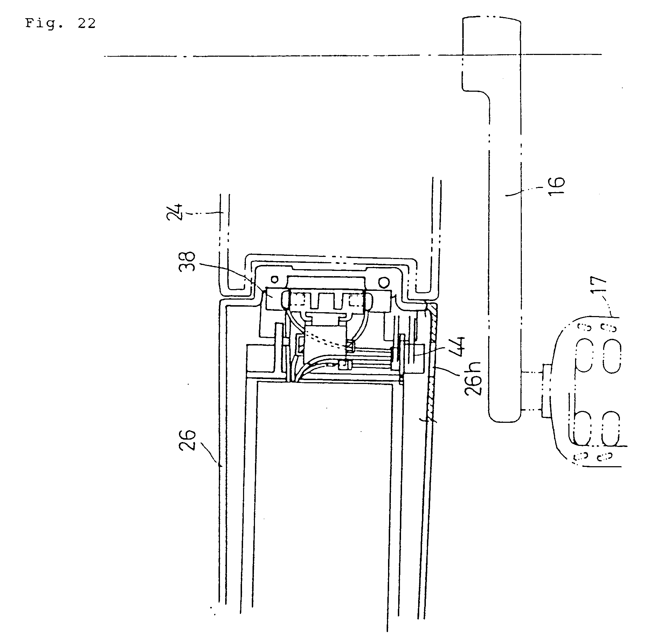

Fig. 22 is a top plan view of a rear portion of the lower case of the battery case.

Fig. 23 is a partially cutaway, side view of a front portion of the battery case in the vicinity of a head pipe.

Fig. 24 is a wiring diagram of the power source battery pack in the preferred embodiment.

### Preferred Embodiment

A preferred embodiment of the present invention will now be described with reference to the drawings.

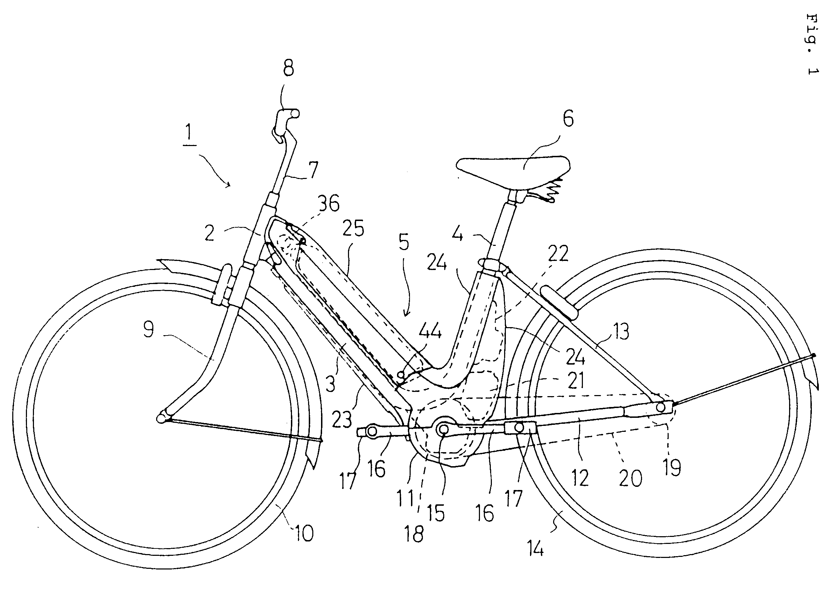

Referring to Fig. 1, reference numeral 1 generally denotes a motor-assisted bicycle 1 according to the preferred embodiment.

The motor-assisted bicycle 1 includes a head pipe 2, a down tube 3 extending rearward and downward from the head pipe 2, and a seat tube 4 extending rearward and upward from the lower end of the down tube 3. Thus, the down tube 3 and the seat tube 4 constitute a substantially V-shaped main frame 5 bent at the lower end of the down tube 3. A seat 6 is provided at the upper end of the seat tube 4.

A steering shaft 7 is pivotably supported to the head pipe 2, and a steering handle 8 is fixedly supported to the upper end of the steering shaft 7. A front fork 9 extends integrally from the lower end of the steering shaft 7, and a front wheel 10 is rotatably supported to the right and left lower ends of the front fork 9.

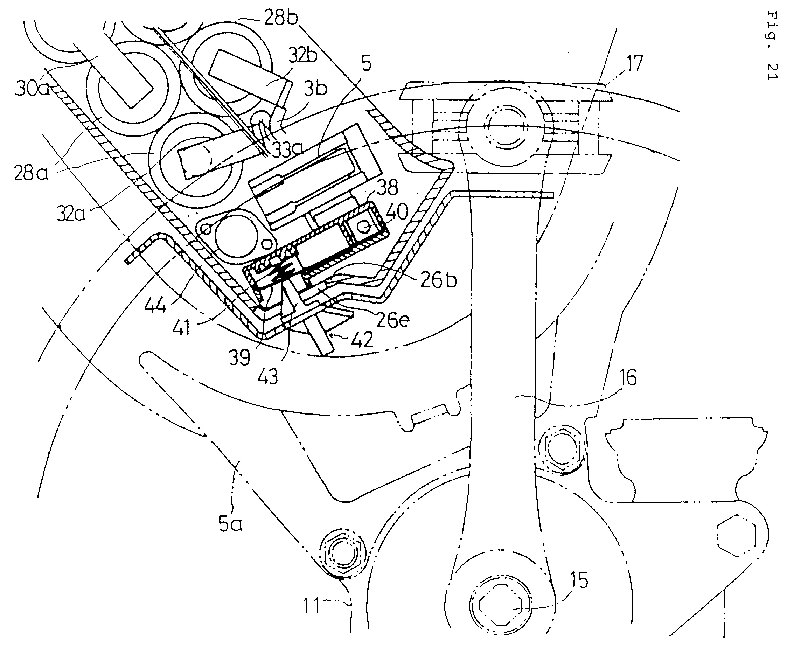

A bracket 5a (see Fig. 21) projects downward from a V-shaped lower end portion of the main frame 5 as the intersection between the down tube 3 and the seat tube 4. A gear box 11 storing a transmission gear mechanism and serving also as a crankcase is suspendedly fixed to the bracket 5a. A rear fork 12 is fixed at its front end to the gear box 11 and extends rearward. A pair of right and left stays 13 extend between the right and left rear ends of the rear fork 12 and the seat tube 4. A rear wheel 14 is rotatably supported to the right and left rear ends of the rear fork 12.

A crankshaft 15 is rotatably supported to the gear box 11. A pair of right and left crank arms 16 are fixed at their base ends to the opposite ends of the crankshaft 15, and a pair of right and left pedals 17 are provided at the outer ends of the pair of crank arms 16.

An endless chain 20 is wrapped around a drive sprocket 18 fixedly mounted on the crankshaft 15 and a driven sprocket 19 fixedly mounted on an axle of the rear wheel 14. When the crankshaft 15 is rotated by a depression force applied to the pedals 17, the rear wheel 14 is rotated through the drive sprocket 18, the endless chain 20, and the driven sprocket 19, thereby allowing the motor-assisted bicycle 1 to be traveled as a usual bicycle.

A driving motor 21 is fixed to the gear box 11 so as to be disposed along the seat tube 4. A control device 22 including an electronic control unit and a motor driver for controlling the operation of the motor 21 is mounted on the rear surface of the seat tube 4 at a position over the motor 21. When the motor 21 is driven under control of the control device 22, the torque of the motor 21 is transmitted through the gear mechanism to the crankshaft 15, thereby assisting man power propelling the bicycle 1.

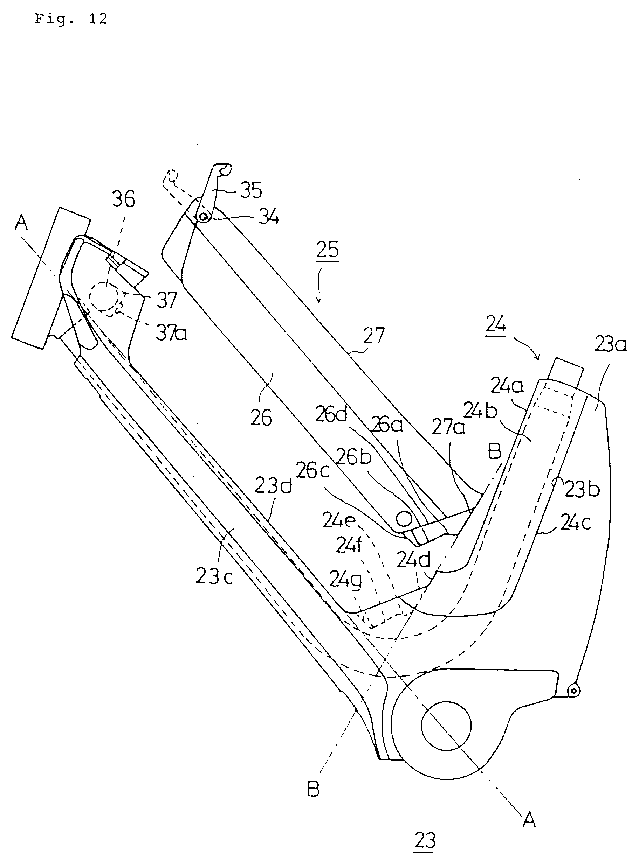

As shown in Figs. 1, and 10 to 13, the main frame 5 consisting of the down tube 3 and the seat tube 4 is covered with substantially V-shaped, separated right and left side covers 23 and a center cover 24. An elongated battery case 25 is detachably mounted on the inclined upper surfaces of the side covers 23 at their front portions covering the down tube 3, and the battery case 25 itself forms a part of the outer surface of the body of the bicycle 1.

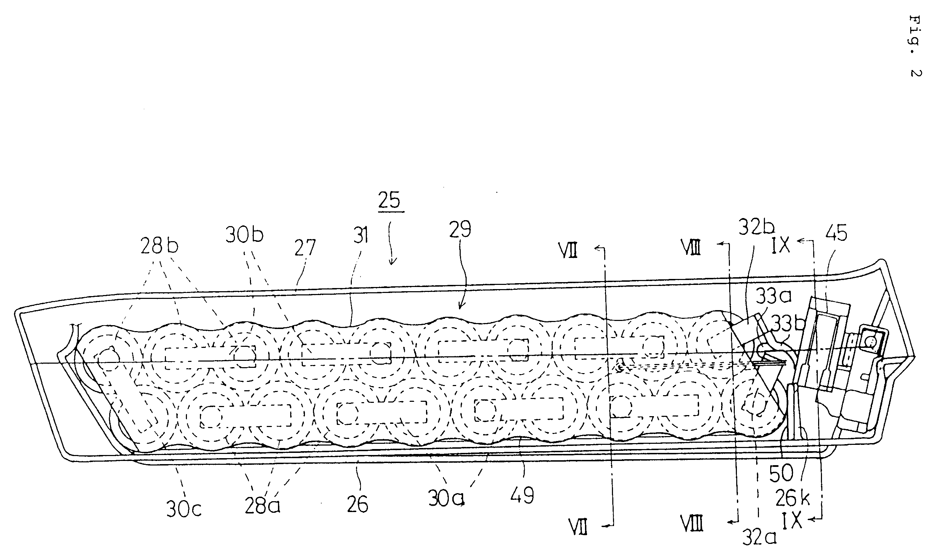

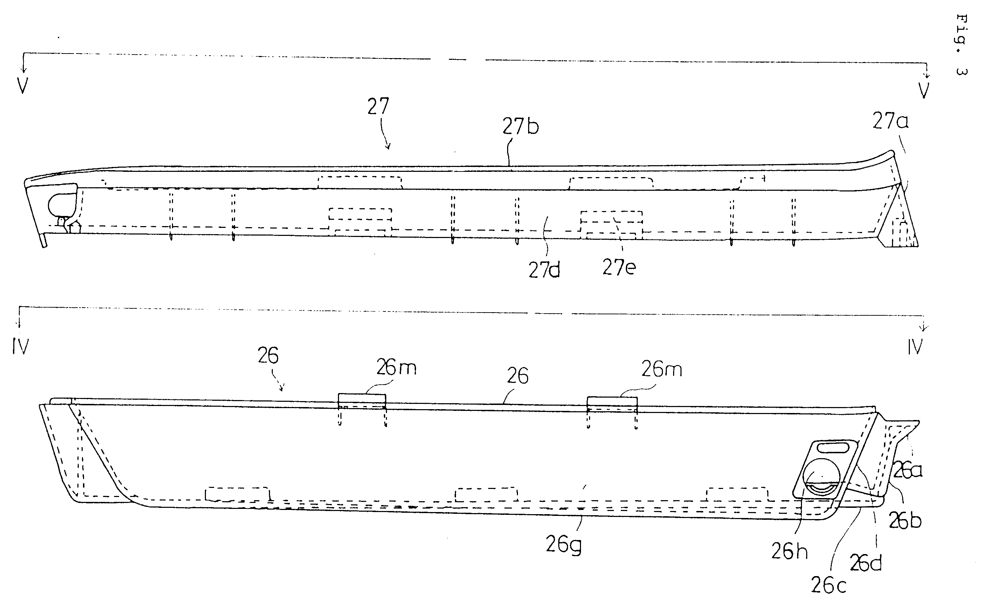

As shown in Figs. 2 and 3, the battery case 25 is composed of a lower case 26 and an upper case 27 divided from each other. A power source battery pack 29 is removably stored in the battery case 25. The battery pack 29 includes twenty cylindrical "D"-size Ni-Cd batteries 28.

The battery pack 29 is constructed as shown in Fig. 2. That is, ten Ni-Cd batteries 28a are arranged in a row in a direction perpendicular to a center line of each Ni-Cd battery 28a in such a condition that the positive electrodes and the negative electrodes of the adjacent Ni-Cd batteries 28a are alternately pointed and the cylindrical surfaces of the adjacent Ni-Cd batteries 28a are in contact with each other. On the row of the Ni-Cd batteries 28a, the other ten Ni-Cd batteries 28b are stacked in such a manner that each Ni-Cd battery 28b is partially received in an upper recess defined between the adjacent Ni-Cd batteries 28a. In this stacked condition, the positive electrodes and the negative electrodes of the adjacent Ni-Cd batteries 28a forming the lower row are electrically and mechanically connected together by soldering through a plurality of connecting members 30a. Similarly, the positive electrodes and the negative electrodes of the adjacent Ni-Cd batteries 28b forming the upper row are connected together through a plurality of connecting members 30b. In particular, the positive electrode of the frontmost Ni-Cd battery 28a (the leftmost one as viewed in Fig. 2) of the lower row and the negative electrode of the frontmost Ni-Cd battery 28b (the leftmost one as viewed in Fig. 2) of the upper row are connected together through a connecting member 30c. Such an assembly of the Ni-Cd batteries 28a and 28b is inserted into a hollow cylindrical heat-shrinkable synthetic resin film 31, and heat is applied to the film 31 to thereby thermally shrink the film 31.

In particular, the negative electrode of the rearmost Ni-Cd battery 28a (the rightmost one as viewed in Fig. 2) of the lower row is connected to one end of a terminal member 32a, and the positive electrode of the rearmost Ni-Cd battery 28b (the rightmost one as viewed in Fig. 2) of the upper row is connected to one end of a terminal member 32b. One end of a lead wire 33a is connected by soldering to the other end of the terminal member 32a, and one end of a lead wire 33b is connected by soldering to the other end of the terminal member 32b.

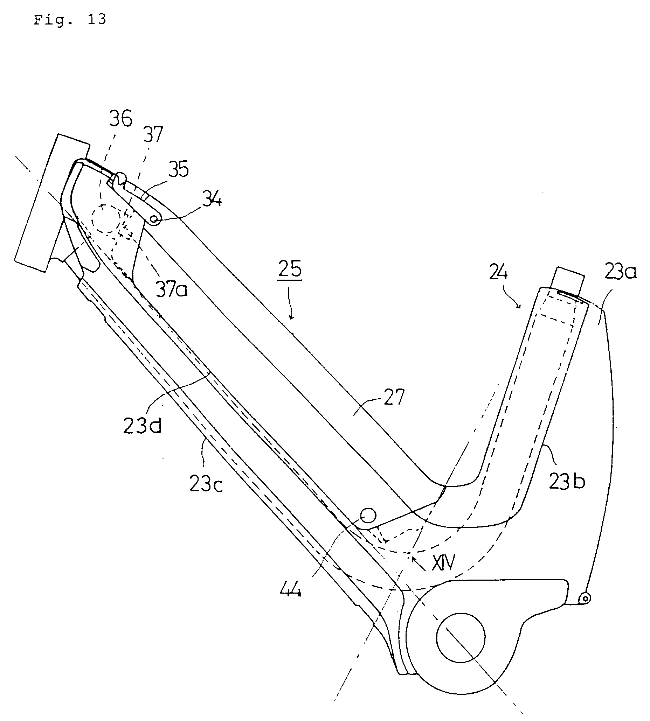

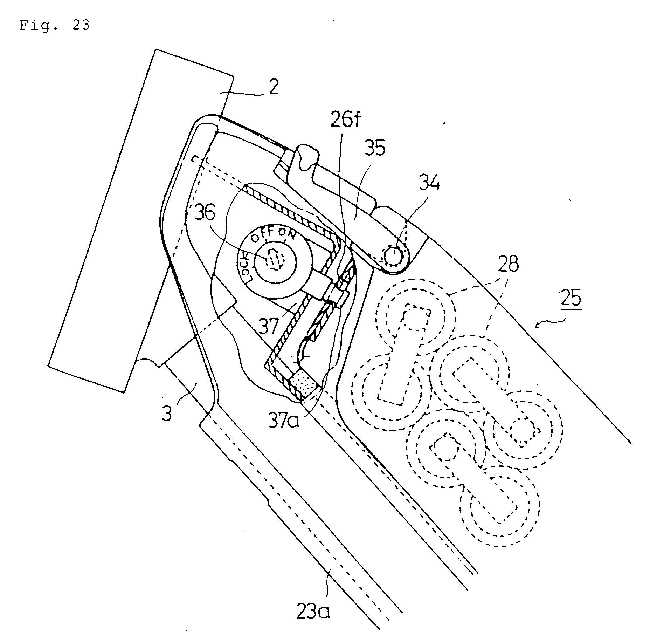

As shown in Figs. 12, 13, and 23, a U-shaped grip 35 is vertically pivotably supported at its both ends through right and left pins 34 to the upper front end portion of the battery case 25.

As shown in Figs. 12, 13, and 23, a combination switch 36 is provided in the left front end portion of the side covers 23 adjacent to the front end of the battery case 25. A lock device 37 adapted to interlock with the operation of the combination switch 36 and fix the battery case 25 to the side cover 23 is provided adjacent to the combination switch 36. When the combination switch 36 is operated to an ON position, a lock pin 37a of the lock device 37 projects rearward to come into engagement with a lock hole 26f formed through a front wall of the lower case 26 of the battery case 25.

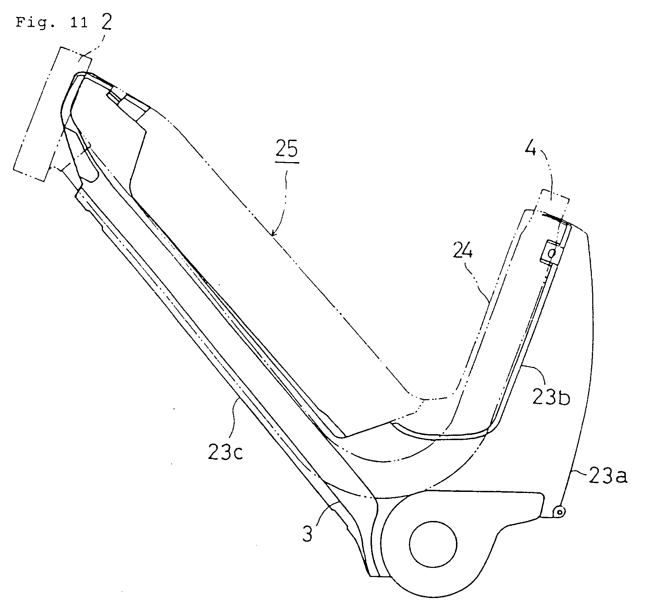

As shown in Fig. 10, the center cover 24 covering the front surface of the seat tube 4 has a J-shape as viewed in side elevation so as to be vertically elongated and bent frontward at the lower end portion. The laterally central portion of the center cover 24 is formed as a frontward projecting portion 24a extending along the seat tube 4, and right and left side walls 24b are formed so as to curvedly extend rearward from the opposite sides of the central projecting portion 24a. The rear edges 24c of the left and right side walls 24b are fitted with the front edges 23b of the right and left rear wall portions 23a of the side covers 23.

The front or lower end of the J-shaped center cover 24 is downward extended to form a four-step inclined surface consisting of four bottom walls 24d, 24e, 24f, and 24g. Further, a pair of opposed vertical side walls 24h are formed at the right and left ends of the bottom walls 24d, 24e, 24f, and 24g. The upper edges of the vertical side walls 24h are bent outward to form a pair of right and left flanges 24i. The bottom wall 24f has a central large opening 24j.

The rear end portions of the lower case 26 and the upper case 27 of the battery case 25 are adapted to abut against the bottom walls 24d, 24e, 24f, and 24g, the vertical side walls 24h, and the flanges 24i of the center cover 24.

More specifically, as shown in Figs. 3 and 12, the upper case 27 is formed with an inclined rear wall 27a adapted to abut against the bottom wall 24d of the center cover 24. The lower case 26 is formed with central inclined rear walls 26a, 26b, and 26c adapted to respectively abut against the bottom walls 24e, 24f, and 24g of the center cover 24, and is also formed with right and left inclined rear walls 26d adapted to respectively abut against the right and left flanges 24i of the center cover 24.

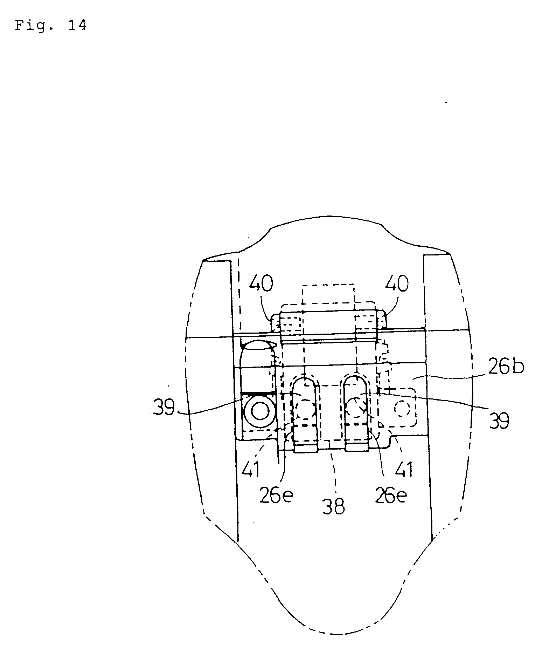

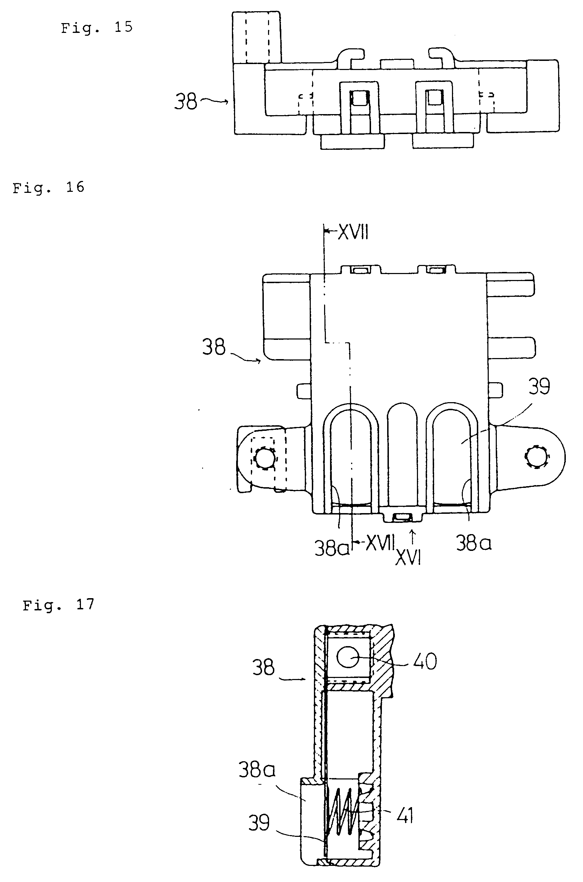

As shown in Fig. 14, a pair of elongated holes 26e are formed through the central rear wall 26b of the lower case 26. A discharging connector 38 as shown in Figs. 15 to 17 is fixed to the inside surface of the central rear wall 26b of the lower case 26.

As shown in Figs. 15 to 17, the discharging connector 38 is provided with a pair of right and left terminal plates 39 fixed at their upper ends by means of screws 40. Each terminal plate 39 is formed from a copper alloy plate and has elasticity. A coil spring 41 is provided so as to rearward bias the lower portion of each terminal plate 39. The other end of each lead wire 33 connected at its one end to each terminal member 32 of the battery pack 29 is mounted on each screw 40.

A pair of openings 38a are formed at the lower portion of the discharging connector 38 at positions behind the lower portions of the terminal plates 39, respectively. The pair of openings 38a correspond to the pair of elongated holes 26e of the central rear wall 26b of the lower case 26, respectively.

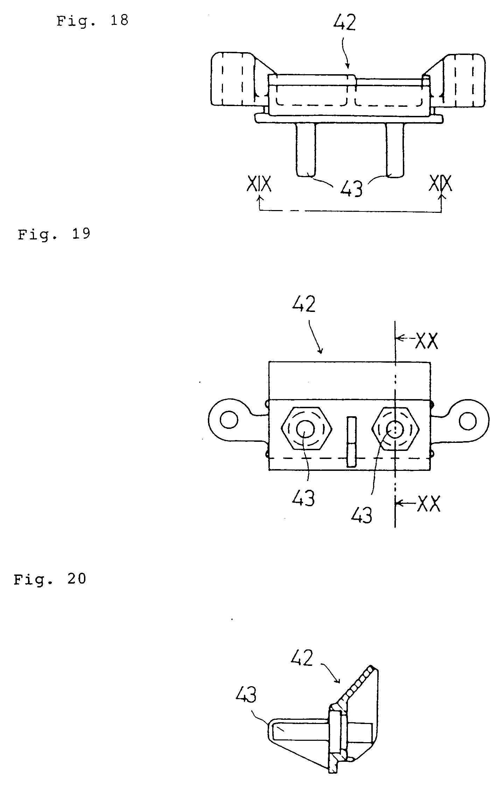

A connector 42 as shown in Figs. 18 to 20 is mounted through the opening 24j of the bottom wall 24f of the center cover 24. As shown in Figs. 18 to 20, the connector 42 has a pair of right and left terminal rods 43 projecting frontward. The pair of terminal rods 43 of the connector 42 are adapted to abut against the pair of terminal plates 39 of the discharging connector 38 mounted inside the lower case 26 of the battery case 25, respectively.

As shown in Fig. 3, an opening 26h is formed through a left side wall 26g of the lower case 26 at the rear portion thereof, and a charging plug 44 is provided inside the lower case 26 at a position opposed to the opening 26h.

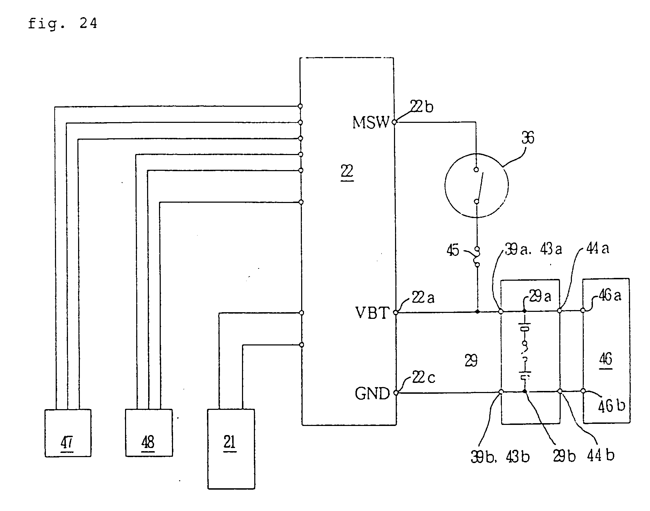

The wiring of the motor 21, the control device 22, and the battery pack 29 in the motor-assisted bicycle 1 will now be described with reference to Fig. 24.

A positive terminal 29a of the battery pack 29 is connected through a positive terminal 39a of the discharging connector 38 to a positive terminal 43a of the connector 42. The positive terminal 43a is connected to a VBT terminal 22a of the control device 22, connected through a fuse 45 and the combination switch 36 to an MSW terminal 22b of the control device 22, and connected through a positive terminal 44a of the charging plug 44 to a positive terminal 46a of a charger 46. A negative terminal 29b of the battery pack 29 is connected through a negative terminal 39b of the discharging connector 38 to a negative terminal 43b of the connector 42. The negative terminal 43b is connected to a GND terminal 22c of the control device 22, and also connected through a negative terminal 44b of the charging plug 44 to a negative terminal 46b of the charger 46.

A crank sensor 47 and a torque sensor 48 in addition to the motor 21 are also connected to the control device 22.

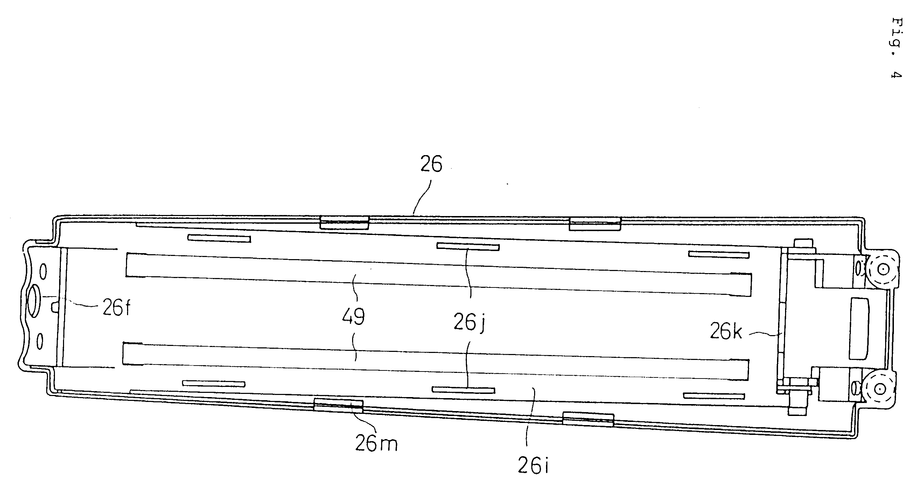

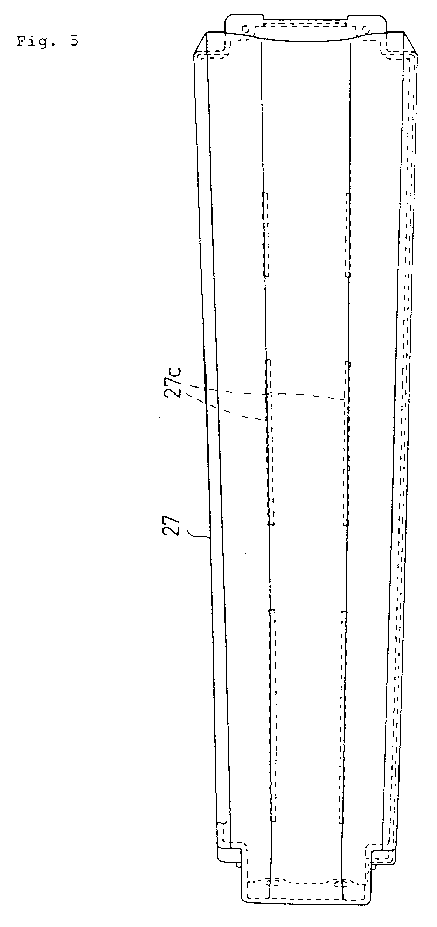

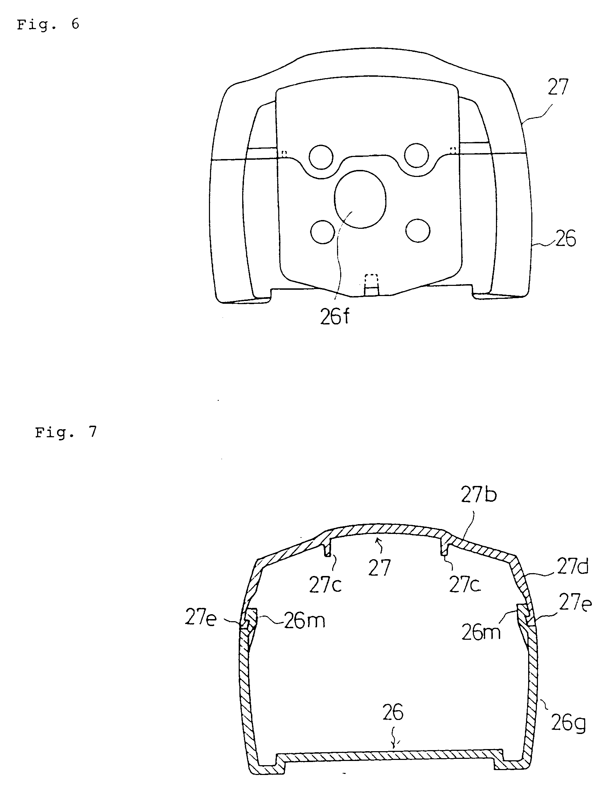

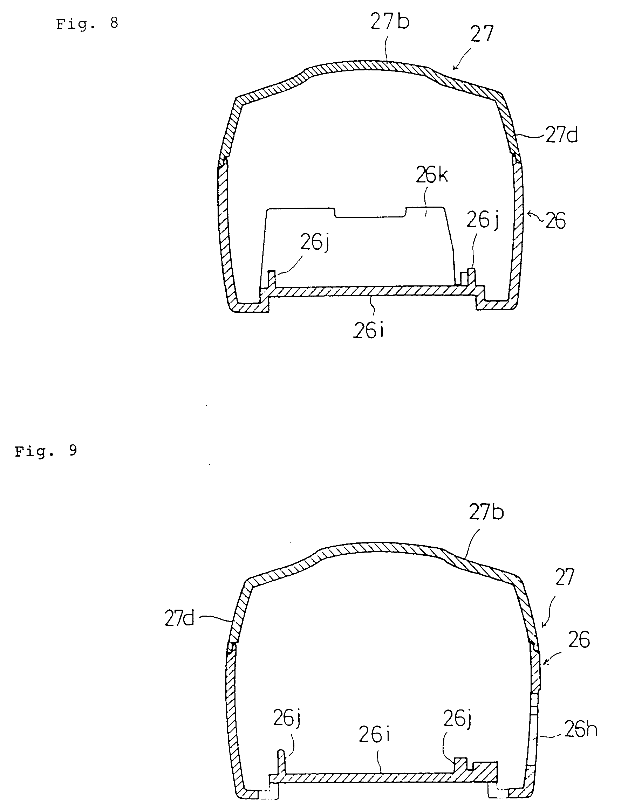

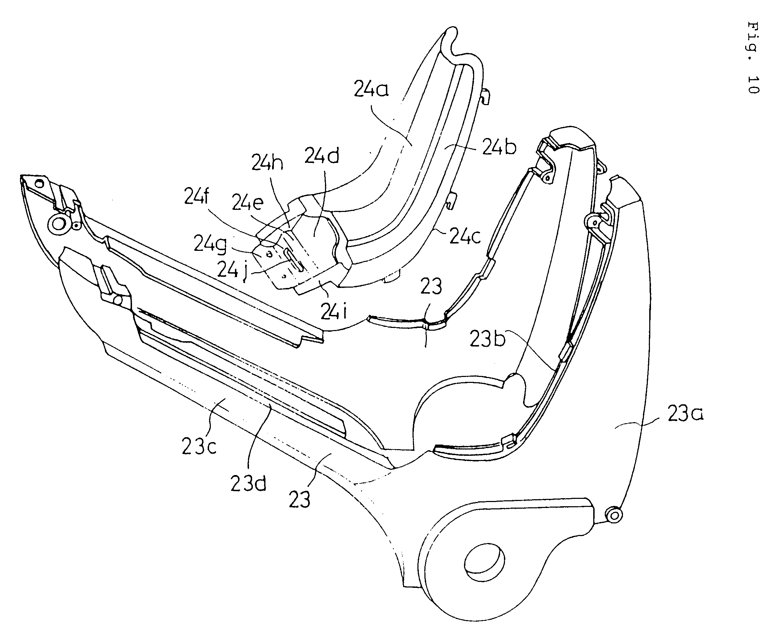

As shown in Figs. 4, 8, and 9, a plurality of projections 26j are formed on the upper surface of a bottom wall 26i of the lower case 26 of the battery case 25 so as to extend along the right and left side edges of the bottom wall 26i. A platelike lug 26k is upright formed on the upper surface of the bottom wall 26i at the rear end portion thereof. As shown in Fig. 4, two elongated cushion members 49 having elasticity are attached on the upper surface of the bottom wall 26i along the inside surfaces of the projections 26j. A similar cushion member 50 is also attached to the front surface of the lug 26k. As shown in Figs. 5 and 7, a plurality of projections 27c are also formed on the lower surface of a top wall 27b of the upper case 27 so as to extend along the right and left side edges of the top wall 27b. A rubber tube (not shown) having elasticity is cut along its generating line, and the cut in the rubber tube is fitted with the projections 27c.

In removing the battery case 25 from the motor-assisted bicycle 1, a key is inserted into the combination switch 36 to operate it to an unlock position. This operation makes the lock pin 37a of the lock device 37 to be retracted from the lock hole 26f of the lower case 26 of the battery case 25. In this unlocked condition, the battery case 25 can be pivoted rearward about the intersection between the inclined rear wall 27a of the upper case 27 and the central rear wall 26a of the lower case 26, that is, the intersection between the bottom wall 24d and the bottom wall 24e of the center cover 24. Alternatively, the battery case 25 may be moved upward in a direction B-B of the bottom wall 24d of the center cover 24 in such a manner that the longitudinal direction of the battery case 25 is kept parallel to a longitudinal direction A-A of upper surfaces 23d of front half portion 23c of the side covers 23. In any case, the battery case 25 can be easily removed as shown in Fig. 12. Thereafter, the battery case 25 may be carried to a charging site remote from the motor-assisted bicycle 1 in order to charge the battery pack 29.

As shown in Figs. 3 and 7, a plurality of engaging portions 26m are formed at the upper ends of the right and left side walls 26g of the lower case 26, and a plurality of engaging portions 27e engaging with the engaging portions 26m are formed at the lower ends of the right and left side walls 27d of the upper case 27. Accordingly, the upper case 27 can be removed from the lower case 26 by disengaging the engaging portions 27e from the engaging portions 26m, thereby allowing the replacement of the battery pack 29.

The cylindrical Ni-Cd batteries 28 are arranged in the upper and lower rows in such a manner that the cylindrical surfaces of the batteries 28 are in contact with each other and the batteries 28 are stacked zigzag, thus forming the battery pack 29. Accordingly, the battery pack 29 can be made compact. Further, the inexpensive "D"-size Ni-Cd batteries 28 are used as the power source having a capacity which can assist man-power propelling of the motor-assisted bicycle 1. Accordingly, a great cost reduction can be expected.

The battery pack 29 is constructed by mechanically and electrically connecting the positive and negative electrodes of the adjacent Ni-Cd batteries 28 through the connecting members 30, and further tightly holding the assembly of the Ni-Cd batteries 28 with the heat-shrinkable synthetic resin film 31. Accordingly, the battery pack 29 can be easily stored into or removed from the battery case 25, and the battery pack 29 can be easily carried. The battery case 25 need not be provided with any connecting members for individually connecting the Ni-Cd batteries 28. Accordingly, the battery case 25 can be reduced both in size and in cost.

In the battery case 25, the battery pack 29 is held on its right and left sides by the projections 26j formed on the bottom wall 26i of the lower case 26. Further, the battery pack 29 is held on its lower and upper sides by the cushion members 49 and 50 attached to the bottom wall 26i and the lug 26k of the lower case 26 and by the rubber tube engaged with the projections 27c formed on the top wall 27b of the upper case 27. Accordingly, even if the battery case 25 receives vibrations during running of the motor-assisted bicycle 1, the battery pack 29 can be stably held in the battery case 25.

The battery pack 29 stored in the battery case 25 can be charged both in the condition where the battery case 25 is mounted on the motor-assisted bicycle 1 and in the condition where the battery case 25 is removed from the motor-assisted bicycle 1.

Although the center line of each Ni-Cd battery 28 is directed laterally of the vehicle body in the above preferred embodiment, each Ni-Cd battery 28 may be stored in the battery case 25 in the condition where the battery 28 is rotated about the longitudinal direction of the battery pack 29.

Summarized the invention provides a compact power source battery storing structure in a motor-assisted bicycle using motive power of a motor to be driven by cylindrical batteries, for assisting man power propelling the bicycle.

Ten Ni-Cd batteries 28a are arranged in a row in a direction perpendicular to a center line of each Ni-Cd battery 28a in such a condition that the positive electrodes and the negative electrodes of the adjacent Ni-Cd batteries 28a are alternately pointed and the cylindrical surfaces of the adjacent Ni-Cd batteries 28a are in contact with each other. On the row of the Ni-Cd batteries 28a, the other ten Ni-Cd batteries 28b are stacked in such a manner that each Ni-Cd battery 28b is partially received in an upper recess defined between the adjacent Ni-Cd batteries 28a. In this stacked condition, the positive electrodes and the negative electrodes of the adjacent Ni-Cd batteries 28a forming the lower row are electrically and mechanically connected together by soldering through a plurality of connecting members 30a. Similarly, the positive electrodes and the negative electrodes of the adjacent Ni-Cd batteries 28b forming the upper row are connected together through a plurality of connecting members 30b. In particular, the positive electrode of the frontmost Ni-Cd battery 28a (the leftmost one as viewed in Fig. 2) of the lower row and the negative electrode of the frontmost Ni-Cd battery 28b (the leftmost one as viewed in Fig. 2) of the upper row are connected together through a connecting member 30c. Such an assembly of the Ni-Cd batteries 28a and 28b is inserted into a hollow cylindrical heat-shrinkable synthetic resin film 31, and heat is applied to the film 31 to thereby thermally shrink the film 31.

## Claims

1. A power source battery storing structure in a motor-assisted bicycle, comprising an elongated power source battery case (25) provided on a frame of said motor-assisted bicycle, for storing an elongated, substantially prismatic power source battery assembly,
wherein the power source battery assembly is formed by arranging a plurality of first cylindrical batteries (28a) in a row in a direction perpendicular to a center line of each first cylindrical battery (28a) in such a condition that cylindrical surfaces of said first cylindrical batteries (28a) are in contact with each other, and stacking a plurality of second cylindrical batteries (28b) on the row of said first cylindrical batteries in such a condition that each second cylindrical battery (28b) is partially received in an upper recess defined between said first cylindrical batteries (28a) adjacent to each other; and
wherein a hollow heat-shrinkable film (31), into which the elongated power source battery assembly is inserted in longitudinal direction of said row, covers an outer periphery of said elongated power source battery assembly and end faces of the first and second cylindrical batteries (28a, b) to integrate said power source battery assembly.

2. A power source battery storing structure in a motor-assisted bicycle according to claim 1, wherein said power source battery assembly is formed as a series power source by electrically connecting positive electrodes and negative electrodes of said first (28a) and second (28b) cylindrical batteries on opposite sides of said power source battery assembly.

3. A power source battery storing structure in a motor-assisted bicycle according to claim 1 or 2, wherein connecting members (30a, b) electrically connecting end faces of the plurality of first and second cylindrical batteries (28a, b) are covered by the hollow heat-shrinkable film (31).

## Patentansprüche

1. Stromquellen-Batterie-Aufnahmestruktur in einem Fahrrad mit Hilfsmotor, umfassend: ein langgestrecktes Stromquellen-Batteriegehäuse (25), das an einem Rahmen des Fahrrads mit Hilfsmotor vorgesehen ist, zur Aufnahme einer langgestreckten, im wesentlichen prismenförmigen Stromquellen-Batterieanordnung,
wobei die Stromquellen-Batterieanordnung gebildet ist durch Anordnen einer Mehrzahl erster zylindrischer Batterien (28a) in einer Reihe in einer zur Mittellinie jeder ersten zylindrischen Batterie (28a) orthogonalen Richtung derart, daß zylindrische Oberflächen der ersten zylindrischen Batterien (28a) einander berühren, und Stapeln einer Mehrzahl zweiter zylindrischer Batterien (28b) auf die Reihe der ersten zylindrischen Batterien derart, daß jede zweite zylindrische Batterie (28b) teilweise in einer oberen Vertiefung aufgenommen ist, die zwischen den einander benachbarten der ersten zylindrischen Batterien (28a) definiert ist; und
wobei eine hohle wärmeschrumpfbare Folie (31), in die die langgestreckte Stromquellen-Batterieanordnung in Längsrichtung der Reihe eingesetzt ist, einen Außenumfang der langgestreckten Stromquellen-Batterieanordnung sowie Endflächen der ersten und zweiten zylindrischen Batterien (28a,b) abdeckt, um die Stromquellen-Batterieanordnung zu integrieren.

2. Stromquellen-Batterie-Aufnahmestruktur in einem Fahrrad mit Hilfsmotor nach Anspruch 1, wobei die Stromquellen-Batterieanordnung als eine serielle Stromquelle ausgebildet ist, indem positive Elektroden und negative Elektroden der ersten (28a) und zweiten (28b) zylindrischen Batterien an entgegengesetzten Seiten der Stromquellen-Batterieanordnung elektrisch verbunden sind.

3. Stromquellen-Batterieaufnahmestruktur in einem Fahrrad mit Hilfsmotor nach Anspruch 1 oder 2, wobei Verbindungselemente (30a,b), die Endflächen der Mehrzahl erster und zweiter zylindrischer Batterien (28a,b) elektrisch verbinden, durch die hohle wärmeschrumpfbare Folie (31) abgedeckt sind.

## Revendications

1. Structure de stockage de batteries formant source d'énergie dans une bicyclette à moteur auxiliaire, comprenant un compartiment allongé (25) de batteries formant source d'énergie, prévu sur un cadre de ladite bicyclette à moteur auxiliaire pour stocker un ensemble allongé, pour l'essentiel prismatique, de batteries formant source d'énergie,
dans laquelle l'ensemble de batteries formant source d'énergie est formé en disposant, en une rangée, une pluralité de premières batteries cylindriques (28a) dans une direction perpendiculaire à un axe médian de chaque première batterie cylindrique (28a), dans une condition telle que des surfaces cylindriques desdites premières batteries cylindriques (28a) soient en contact les unes avec les autres ; et en empilant une pluralité de secondes batteries cylindriques (28b) sur la rangée desdites premières batteries cylindriques, dans une condition telle que chaque seconde batterie cylindrique (28b) soit partiellement logée dans un évidement supérieur défini entre lesdites premières batteries cylindriques (28a) adjacentes les unes aux autres ; et
dans laquelle une pellicule creuse thermorétractible (31), dans laquelle l'ensemble allongé de batteries formant source d'énergie est inséré dans une direction longitudinale de ladite rangée, recouvre une périphérie extérieure dudit ensemble allongé de batteries formant source d'énergie, et des faces extrêmes des premières et secondes batteries cylindriques (28a, b), de manière à intégrer ledit ensemble de batteries formant source d'énergie.

2. Structure de stockage de batteries formant source d'énergie dans une bicyclette à moteur auxiliaire, selon la revendication 1, dans laquelle ledit ensemble de batteries formant source d'énergie est réalisé sous la forme d'une source de puissance branchée en série en connectant électriquement, sur des côtés opposés dudit ensemble de batteries formant source d'énergie, des électrodes positives et des électrodes négatives desdites premières (28a) et secondes (28b) batteries cylindriques.

3. Structure de stockage de batteries formant source d'énergie dans une bicyclette à moteur auxiliaire, selon la revendication 1 ou 2, dans laquelle des pièces de connexion (30a, b), raccordant électriquement des faces extrêmes de la pluralité de premières et secondes batteries cylindriques (28a, b), sont recouvertes par la pellicule creuse thermorétractible (31).
